Europäisches Patentamt

European Patent Office

Office européen des brevets

(11) Veröffentlichungsnummer: **0 285 677 B1**

## EUROPÄISCHE PATENTSCHRIFT

(45) Veröffentlichungstag der Patentschrift: **02.12.92**

(21) Anmeldenummer: **87104389.9**

(22) Anmeldetag: **25.03.87**

(51) Int. Cl.⁵: **F16L 19/06**

(54) **Klemmverbindung für Druckrohrleitungen.**

(43) Veröffentlichungstag der Anmeldung:
**12.10.88 Patentblatt 88/41**

(45) Bekanntmachung des Hinweises auf die
Patenterteilung:
**02.12.92 Patentblatt 92/49**

(84) Benannte Vertragsstaaten:
**AT BE CH DE ES FR GB IT LI LU NL SE**

(56) Entgegenhaltungen:
**DE-A- 2 754 055**
**DE-B- 1 273 281**
**FR-A- 893 409**
**US-A- 3 957 295**

**PATENT ABSTRACTS OF JAPAN, Band 6, Nr.
197 (C-128)[1075], 6. Oktober 1982; & JP - A -
57 105 480 (OSAKA GAS) 30.06.1982**

(73) Patentinhaber: **MANIBS Spezialarmaturen
GmbH & Co. KG
Lempstrasse 24
W-5630 Remscheid 16 (Bliedinghausen)(DE)**

(72) Erfinder: **Schafstein, Jurgen
Baisieper Str. 94
5630 Remscheid 1(DE)**

(74) Vertreter: **Mentzel, Norbert, Dipl.-Phys. et al
Patentanwälte Dipl.-Phys. Buse Dipl.-Phys.
Mentzel Dipl.-Ing. Ludewig Unterdörnen 114
W-5600 Wuppertal 2(DE)**

## Beschreibung

Die Erfindung betrifft eine Klemmverbindung für Druckrohrleitungen, bestehend aus einem rohrförmigen Anschlußkörper, der zur Aufnahme der Druckrohrleitung dient und stirnendig einen in axialer Richtung spannbaren Druckring aufweist, mit dem zur Abdichtung des umlaufenden Ringspaltes zwischen der Druckrohrleitung und dem Anschlußkörper mit dem daran gehalterten Druckring ein Dichtungsring aus weichelastischem Material, wie Gummi, Kunststoff od.dgl., gegen eine konisch nach innen verlaufende Stirnfläche des Anschlußkörpers und damit auch dichtend gegen die äußere Mantelfläche der Druckrohrleitung preßbar ist.

Bei dieser, aus der US-A-39 57 295 bekannten Klemmverbindung wird eine zuverlässig wirkende Verbindung geschaffen, da mit dem Dichtungsring aus weichelastischem Material, wie Gummi, Kunststoff od.dgl., der gegen die konisch nach innen verlaufende Stirnfläche des Anschlußkörpers und gegen die äußere Mantelfläche der Druckrohrleitung gepreßt ist, eine dichte Verbindung bewirkt wird. Bei einem Brandfall kann es jedoch vorkommen, daß die Druckrohrleitung und damit die Klemmverbindung erhitzt wird, wodurch die aus einem weichelastischem Material, wie Gummi, Kunststoff od.dgl., bestehende Dichtungsring mindestens teilweise zerstört wird. Dadurch wird die Verbindung undicht, und das durch die Druckrohrleitung strömende Haushaltsgas kann ausströmen und brennen.

Es ist auch schon eine Klemmverbindung bekanntgeworden, bei der ein Teil des Dichtungsringes aus einem hitzebeständigem Material gefertigt ist, wobei der aus hitzebeständigem Material bestehende Dichtungsringteil ebenfalls gegen die konisch nach innen verlaufende Stirnfläche des Anschlußkörpers und die äußere Mantelfläche der Druckrohrleitung gepreßt ist. Dieser Dichtungsringteil aus hitzebeständigem Material weist jedoch nicht die Elastizität auf, um eine einwandfreie Abdichtung zu erzielen, insbesondere wenn der daneben angeordnete Dichtungsringteil aus weichelastischem Material, wie Gummi, Kunststoff od.dgl., durch Erwärmung zerstört wird, und somit sich der Aufnahmeraum für den aus hitzebeständigem Material bestehende Dichtungsringteil vergrößert. Der Dichtungsringteil aus hitzebeständigem Material bekommt durch eine solche Erwärmung kein größeres Volumen.

Aus der JP-A 57 105 480 ist auch eine Flanschverbindung bekanntgeworden, bei der der an einem Rohrende vorgesehene Flansch flächig gegen den Flansch anliegt, der am zweiten Rohrende vorgesehen ist. Die beiden Flansche werden dabei mit Schrauben gegeneinandergespannt. Der eine Flansch weist dabei in seiner gegen den Flansch des anderen Rohrendes zur Anlage kommenden Stirnfläche zwei umlaufende Ringnuten auf. In der einen Ringnut ist ein Dichtungsring aus Gummi od.dgl. eingesetzt, während in der zweiten Ringnut ein Ring aus Brandschutzmaterial eingesetzt ist, der sich bei Erwärmung aufschäumend ausdehnt. Der Ring aus Brandschutzmaterial füllt dabei jedoch schon bei normaler Temperatur vollständig die Ringnut aus, so daß bei einer Erwärmung überhaupt kein Ausfüllen von Ringspalte erforderlich ist. Außerdem wird durch das aufschäumende Ausdehnen auch nicht der Raum ausgefüllt, den vorher ggf. der Dichtungsring aus Gummi od.dgl. ausgefüllt hat.

Der Erfindung liegt die Aufgabe zugrunde, eine Klemmverbindung für Druckrohrleitungen der eingangs erläuterten Art zu schaffen, bei der auch in Brandfällen eine zuverlässige Dichtheit aufrechterhalten wird.

Diese Aufgabe ist erfindungsgemäß dadurch gelöst, daß der von der äußeren Mantelfläche der Druckrohrleitung, der konisch nach innen verlaufenden Stirnfläche des Anschlußkörpers und dem spannbaren Druckring begrenzte und zur Aufnahme des Dichtungsringes aus weichelastischem Material dienende Raum zugleich einen Ring aus einem an sich bekannten Brandschutzmaterial, bestehend aus einem bei einer Erwärmung auf über 120° C sich aufschäumend ausdehnenden und Wasserdampf ausscheidenden und bei ca. 180° C etwa das 5- bis 11-fache Volumen aufweisenden, eingebettete Silikate aufweisenden synthetischen Elastomer, derart aufnimmt, daß bei einer durch einen Brand od.dgl. bewirkten Erwärmung der Klemmverbindung und dem dabei erfolgenden Zerstören des Dichtungsringes aus weichelastischem Material die von dem Ring aus Brandschutzmaterial entstehende Aufschäumung den vorher von dem Dichtungsring eingenommenen Raum ausfüllt und abdichtet. Dadurch wird in einfacher Weise beim bestimmungsgemäßen Gebrauch der Klemmverbindung der umlaufende Ringspalt zwischen der Druckrohrleitung und dem Anschlußkörper mit dem daran gehalterten Druckring mittels des Dichtungsringes aus weichelastischem Material, wie Gummi, Kunststoff od.dgl., abgedichtet. Bei einer Erwärmung der Klemmverbindung auf über 120° C durch einen Brand od.dgl. beginnt der zusätzliche Ring aus dem Brandschutzmaterial sich aufschäumend auszudehnen unter Ausscheidung von Wasserdampf und füllt den Raum aus, der vom Dichtungsring aus weichelastischem Material eingenommen und durch die Erwärmung zerstört wurde. Es wird somit eine Abdichtung gebildet, die selbst bei einer vollständigen Zerstörung des Dichtungsringes aus weichelastischem Material durch die Erhitzung ein Ausströmen des in der Druckrohrleitung unter Druck stehenden Gases verhindert. Den neueren Bestimmungen, wonach solche Klemmverbindungen für Druckrohrleitungen eine Erwärmung auf 650° C eine halbe Stunde aushalten müssen, wird somit Genüge getan.

Der aus Brandschutzmaterial bestehende Ring kann in einer umlaufenden Ringnut des Dichtungsringes aus weichelastischem Material eingesetzt sein. Beim Aufschäumen des aus Brandschutzmaterial bestehenden Ringes wird somit in vorteilhafter Weise der Raum ausgefüllt, der von dem durch die Hitze zerstörten Dichtungsring aus weichelastischem Material vorher eingenommen war,und bewirkt eine zuverlässige Abdichtung.

Die den aus Brandschutzmaterial bestehenden Ring aufnehmende Ringnut kann in der äußeren Mantelfläche des Dichtungsringes aus weichelastischem Material vorgesehen sein. Dadurch ist in einfacher Weise ein Einsetzen des aus Brandschutzmaterial bestehenden Ringes in dem aus weichelastischem Material bestehenden Dichtungsring möglich. Die Montage des Dichtungsringes aus weichelastischem Material in die Klemmverbindung ist durch den eingesetzten Ring aus Brandschutzmaterial nicht beeinträchtigt.

Der aus Brandschutzmaterial bestehende Ring kann zwischen dem Dichtungsring und dem spannbaren Druckring angeordnet sein. Dadurch wird ebenfalls eine einfache Montage erreicht, da bei der Montage zunächst der Dichtungsring aus weichelastischem Material in den Anschlußkörper und dann der aus Brandschutzmaterial bestehende Ring eingeschoben werden kann, bevor dann abschließend der Druckring an dem Anschlußkörper spannend zu befestigen ist.

Der aus Brandschutzmaterial bestehende und zwischen dem Dichtungsring und dem spannbaren Druckring angeordnete Ring aus Brandschutzmaterial kann mit seiner inneren Mantelfläche mit einem radialen Abstand zur äußeren Mantelfläche der eingeschobenen Druckrohrleitung angeordnet sein. Dadurch wird das Einschieben der Druckrohrleitung in den Anschlußkörper bzw. das Verschieben des Druckringes auf der Druckrohrleitung durch den aus Brandschutzmaterial bestehenden Ring nicht beeinträchtigt. Durch das Aufschäumen im Brandfalle wird dieser Abstand ebenfalls in einfacher Weise ausgefüllt.

Auf der Zeichnung ist die Erfindung in zwei Ausführungsbeispielen dargestellt, und zwar zeigen:

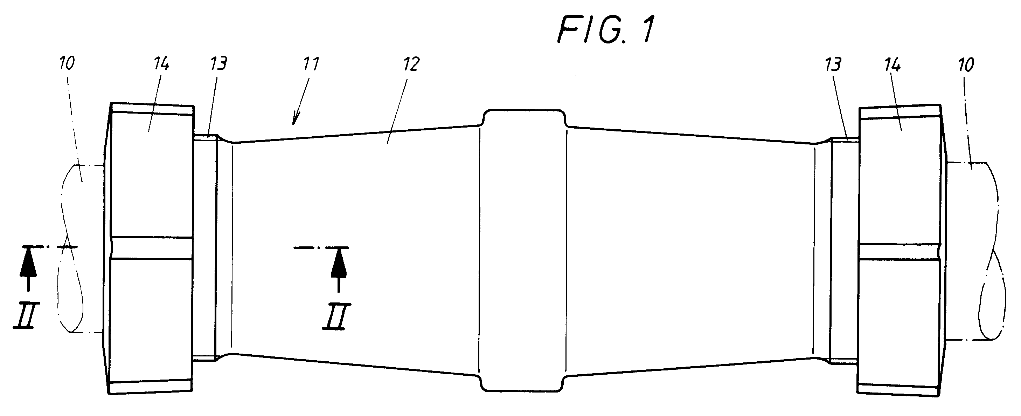

Fig. 1 eine flexible Rohrkupplung mit der erfindungsgemäßen Klemmverbindung in Seitenansicht,

Fig. 2 einen Schnitt nach der Linie II - II der Fig. 1, teilweise weggebrochen,

Fig. 3 die in der Fig. 2 dargestellte Klemmverbindung nach einer Erwärmung durch einen Brand, und

Fig. 4 eine zweite Ausführungsform der erfindungsgemäßen Klemmverbindung in einem der Fig. 2 entsprechenden Schnitt.

Die in der Zeichnung dargestellten Klemmverbindungen sind am Beispiel einer Rohrkupplung dargestellt, mit der zwei Druckrohrleitungen 10 miteinander verbunden werden können. Die Rohrkupplung 11 besteht aus einem rohrförmigen Anschlußkörper 12, der an seinen Stirnenden außenseitig mit je einem Gewinde 13 versehen ist und zur Aufnahme der Druckrohrleitungen 10 dient. Mit einer auf das Außengewinde 13 aufziehbaren Überwurfmutter 14 ist ein Dichtungsring 15 aus weichelastischem Material, wie Gummi, Kunststoff od.dgl., gegen eine konisch nach innen verlaufende Stirnfläche 16 des Anschlußkörpers 12 und damit dichtend gegen die äußere Mantelfläche 17 der Druckrohrleitung 10 drückbar. Der nach innen gerichtete Flansch 18 der Überwurfmutter 14 wirkt somit als spannbarer Druckring gegen den Dichtungsring 15 aus weichelastischem Material, wobei zwischen dem als Druckring wirkenden Flansch 18 der Überwurfmutter 14 und dem Dichtungsring 15 aus weichelastischem Material ein metallischer Zwischenring 19 vorgesehen ist. Mit dem gespannten Dichtungsring 15 aus weichelastischem Material wird somit der umlaufende Ringspalt 20 zwischen der Druckrohrleitung 10 und dem rohrförmigen Anschlußkörper 12 mit der daran gehaltenen Überwurfmutter 14 zuverlässig verschlossen.

Damit die Klemmverbindung bei Bränden od.dgl. mindestens eine halbe Stunde lang eine Temperatur von 650° C aushalten kann, ohne die Dichtheit zu verlieren, ist dem Ringspalt 20 zusätzlich zu dem durch Pressen der Abdichtung des Ringspaltes 20 dienenden Dichtungsringes 15 aus weichelastischem Material ein Ring aus einem an sich bekannten Brandschutzmaterial zugeordnet, der aus einem bei einer Erwärmung auf über 120° C sich aufschäumend ausdehnenden und Wasserdampf ausscheidenden und bei ca. 180° C etwa das 5- bis 11fache Volumen aufweisenden, eingebettete Silikate aufweisenden synthetischen Elastomer besteht. Dieser Ring 21 aus Brandschutzmaterial ist dabei dem Ringspalt 20 derart zugeordnet, daß bei einer durch einen Brand od.dgl. bewirkten Erwärmung der Klemmverbindung die Aufschäumung 22 den Ringspalt 20 umlaufend und mindestens auf einem Teil seiner axialen Länge ausfüllt und an Stelle des durch die Erwärmung ggf. zerstörten Dichtungsringes 15 abdichtet. Bei einer Erwärmung der Klemmverbindung durch einen Brand od.dgl. vergrößert sich somit das Volumen des Ringes 21 aus Brandschutzmaterial, sobald die Temperatur von 120° C überschritten ist. Bei diesem endothermen Prozeß wird Wärmeenergie der Druckrohrleitung 10 bzw. dem Anschlußkörper 12 und der Überwurfmutter 14 entzogen, so daß auch noch eine Kühlung eintritt. Durch die Volumenvergrößerung des Ringes 21 aus Brandschutzmaterial wird der Ringspalt 20 zwischen der Druckrohrleitung 10 und dem Anschlußkörper 12 mit der daran gehaltenen Überwurfmutter 14 durch die Aufschäumung 22 ausgefüllt, so daß eine Abdichtung eintritt und kein Gas aus der Druckrohrleitung 10 austreten kann, auch wenn durch die Erwärmung der Dichtungsring 15 aus weichelastischem Material zerstört wird.

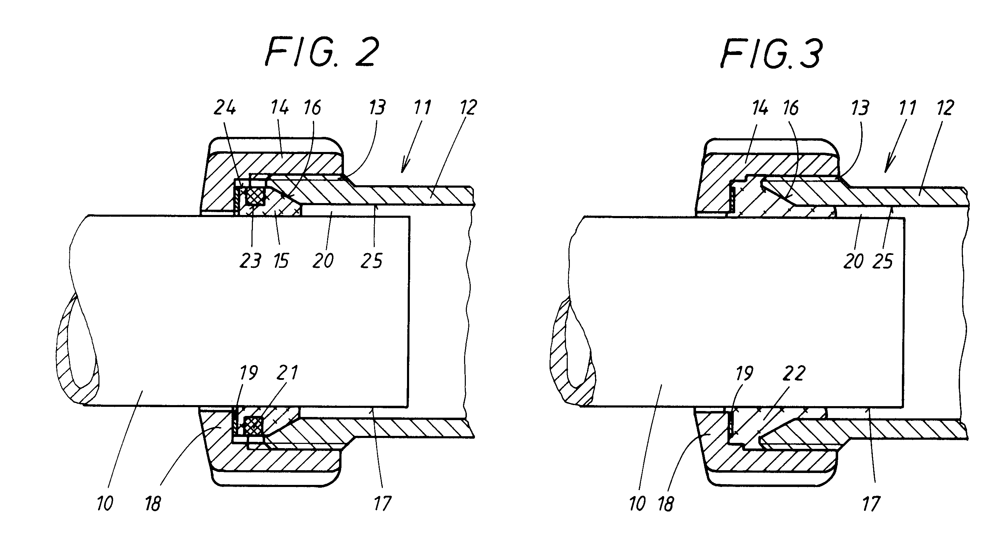

Bei dem in Fig. 2 dargestellten Ausführungsbeispiel ist der aus Brandschutzmaterial bestehende Ring 21 in einer umlaufenden Ringnut 23 des Dichtungsringes 15 aus weichelastischem Material eingesetzt. Die den aus Brandschutzmaterial bestehenden Ring 21 aufnehmende Ringnut 23 ist dabei in der äußeren Mantelfläche 24 des Dichtungsringes 15 aus weichelastischem Material vorgesehen. Der aus Brandschutzmaterial bestehende Ring 21 kann somit vor der Montage in die Ringnut 23 des Dichtungsringes 15 aus weichelastischem Material eingesetzt und zusammen mit dem Dichtungsring 15 aus weichelastischem Material montiert werden. Bei einer Erwärmung der Klemmverbindung durch einen Brand od.dgl. wird der Dichtungsring 15 zerstört, da das weichelastische Material des Dichtungsringes nicht hitzebeständig ist. Gleichzeitig mit der durch die Erwärmung bewirkten Zerstörung des Dichtungsringes 15 aus weichelastischem Material vergrößert der Ring 21 aus dem Brandschutzmaterial sein Volumen und füllt den Raum aus, der vorher von dem Dichtungsring 15 aus weichelastischem Material ausgefüllt war. Diese Aufschäumung 22 ist in der Fig. 3 näher dargestellt.

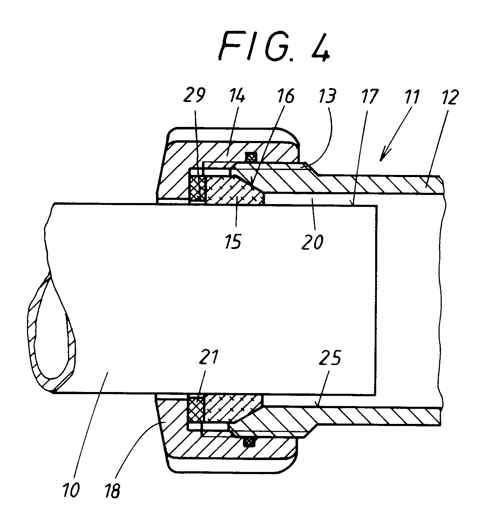

Bei dem in der Fig. 4 dargestellten zweiten Ausführungsbeispiel ist der aus Brandschutzmaterial bestehende Ring 21 zwischen dem Dichtungsring 15 aus weichelastischem Material und dem als Druckring wirkenden Flansch 18 der Überwurfmutter 14 angeordnet. Auch bei dieser Ausführungsform kann der aus Brandschutzmaterial bestehende Ring 21 bei einer Erwärmung sein Volumen vergrößern und den Raum des Dichtungsringes 15 aus weichelastischem Material bei dessen Zerstörung vollständig ausfüllen.

Bei dem in Fig. 4 dargestellten Ausführungsbeispiel ist der aus Brandschutzmaterial bestehende Ring 21 mit seiner inneren Mantelfläche 29 mit einem radialen Abstand zur äußeren Mantelfläche 17 der eingeschobenen Druckrohrleitung 10 angeordnet. Dadurch wird eine leichte Montage erzielt, da der eingesetzte Ring 21 aus Brandschutzmaterial das Verschieben der Überwurfmutter 14 auf der Druckrohrleitung 10 bzw. das Einschieben der Druckrohrleitung 10 in den rohrförmigen Anschlußkörper 12 nicht beeinträchtigt.

**Patentansprüche**

1. Klemmverbindung für Druckrohrleitungen (10), bestehend aus einem rohrförmigen Anschlußkörper (12), der zur Aufnahme der Druckrohrleitung (10) dient und stirnendig einen in axialer Richtung spannbaren Druckring (14,18) aufweist, mit dem zur Abdichtung des umlaufenden Ringspaltes (20) zwischen der Druckrohrleitung (10) und dem Anschlußkörper (12) mit dem daran gehaltenen Druckring (14,18) ein Dichtungsring (15) aus weichelastischem Material, wie Gummi, Kunststoff od.dgl., gegen eine konisch nach innen verlaufende Stirnfläche (16) des Anschlußkörpers (12) und damit auch dichtend gegen die äußere Mantelfläche (17) der Druckrohrleitung (10) preßbar ist, **dadurch gekennzeichnet,** daß der von der äußeren Mantelfläche (17) der Druckrohrleitung (10), der konisch nach innen verlaufenden Stirnfläche (16) des Anschlußkörpers (12) und dem spannbaren Druckring (14,18) begrenzte und zur Aufnahme des Dichtungsringes (15) aus weichelastischem Material dienende Raum zugleich einen Ring (21) aus einem an sich bekannten Brandschutzmaterial, bestehend aus einem bei einer Erwärmung auf über 120°C sich aufschäumend ausdehnenden und Wasserdampf ausscheidenden und bei ca. 180°C etwa das 5- bis 11-fache Volumen aufweisenden, eingebettete Silikate aufweisenden synthetischen Elastomer, derart aufnimmt, daß bei einer durch einen Brand o.dgl. bewirkten Erwärmung der Klemmverbindung und dem dabei erfolgenden Zerstören des Dichtungsringes (15) aus weichelastischem Material die von dem Ring (21) aus Brandschutzmaterial entstehende Aufschäumung (22) den vorher von dem Dichtungsring (15) eingenommenen Raum ausfüllt und abdichtet.

2. Klemmverbindung nach Anspruch 1, dadurch gekennzeichnet, daß der aus Brandschutzmaterial bestehende Ring (21) in einer umlaufenden Ringnut (23) des Dichtungsringes (15) aus weichelastischem Material eingesetzt ist.

3. Klemmverbindung nach Anspruch 2, dadurch gekennzeichnet, daß die den aus Brandschutzmaterial bestehenden Ring (21) aufnehmende Ringnut (23) in der äußeren Mantelfläche (24) des Dichtungsringes (15) aus weichelastischem Material vorgesehen ist.

4. Klemmverbindung nach Anspruch 1, dadurch gekennzeichnet, daß der aus Brandschutzmaterial bestehende Ring (21) zwischen dem Dichtungsring (15) und dem spannbaren Druckring (14,18) angeordnet ist.

5. Klemmverbindung nach Anspruch 4, dadurch gekennzeichnet, daß der aus Brandschutzmaterial bestehende und zwischen dem Dichtungsring (15) und dem spannbaren Druckring (14,18) angeordnete Ring (21) mit seiner inneren Mantelfläche (29) mit einem radialen Abstand zur äußeren Mantelfläche (17) der eingeschobenen Druckrohrleitung (10) angeordnet ist.

**Claims**

1. A clamping coupling for pressure pipes (10), consisting of a tubular connection body (12), which serves to hold the pressure pipe (10) and exhibits a thrust collar (14, 18) at each end which can be clamped in the axial direction with which, in order to seal the annular gap (20) between the pipe (10) and the connection body (12) with the thrust collar attached to it, a sealing ring (15), made of flexible material such as rubber, plastic or the like, can be pressed against an inward tapered end (16) of the connection body (12) and thus also acts as a seal against the outer pipe surface (17),
**characterised in that**
the space limited by the outer surface (17) of the pressure pipe (10), the inward tapered end face (16) of the connection body (12) and the clampable thrust collar (14, 18) and serving to accommodate the sealing ring (15) made of flexible material at the same time accommodates a ring (21), which is made of a known fireproofing material, comprising a synthetic elastomer exhibiting embedded silicates which foams up and expands on heating to over 120°C, releases steam and has roughly 5 to 11 times its own volume at about 180°C, in such a fashion that, on heating of the clamping coupling due to a fire or the like and after the resultant destruction of the sealing ring (15) made of flexible material, said foam expansion (22) produced by the ring (21) made of fireproofing material fills out and seals the space previously occupied by the sealing ring (15).

2. A clamping coupling according to claim 1, characterised in that the ring (21) made of fireproofing material is inserted in an annular groove (23) in the sealing ring (15) made of flexible material.

3. A clamping coupling according to claim 2, characterised in that the annular groove (23) which holds the ring (21) made of fireproofing material is provided in the outer surface (24) of the sealing ring (15) made of flexible material.

4. A clamping coupling according to claim 1, characterised in that the ring (21) made of fireproofing material is arranged between the sealing ring (15) and the clampable thrust collar (14, 18).

5. A clamping coupling according to claim 4, characterised in that the ring (21) made of fireproofing material and located between the sealing ring (15) and the clampable thrust collar (14, 18) is arranged with its inner surface (29) at a radial distance to the outer surface (17) of the inserted pressure pipe (10).

**Revendications**

1. Raccord de serrage pour conduites sous pression (10), comprenant un corps de branchement (12) en forme de tuyau et destiné à recevoir la conduite sous pression (10) et dont l'extrémité frontale présente une bague de compression (14, 18) avec laquelle on peut, pour étancher la fente circulaire (20) entre la conduite sous pression (10) et le corps de branchement (12) avec la bague de conpression fixée dedans (14, 18), serrer dans le sens axial une bague d'étanchéité (15) en matériau élastique mou tel du caoutchouc, du plastique ou assimilé contre une surface frontale conique vers l'intérieur (16) du corps de branchement (12), étanchant de la sorte la surface extérieure de l'enveloppe (17) de la conduite sous pression (10),
**caractérisé en ce que**
le volume limité par la surface extérieure de l'enveloppe (17) de la conduite sous pression, par la surface frontale (16) conique vers l'intérieur du corps de branchement (12) et la bague de compression serrable (14,18), et servant de logement à la bague d'étanchéité (15) en matériau élastique mou, sert simultanément de logement à une bague (21) en un matériau de protection anti-incendie en soi connu, composé d'un élastomère synthétique à silicates noyés dedans, qui se dilate en moussant et rejette la vapeur d'eau si échauffé à plus de 120°C et dont le volume augmente d'un multiple compris entre 5 et 11 à 180°C env., de telle sorte qu'en cas d'échauffement du raccord de serrage dû à un incendie ou assimilé et pendant la destruction en cours de la bague d'étanchéité (15) en matériau élastique mou, le moussage (22) produit par la bague (21) en matériau de protection anti-incendie remplit et étanchéifie le volume précédemment occupé par la bague d'étanchéité (15).

2. Raccord de serrage selon revendication 1, caractérisé en ce que la bague (21) en matériau de protection anti-incendie est logée dans une rainure annulaire (23) que présente la bague d'étanchéité (15) en matériau élastique mou.

3. Raccord de serrage selon revendication 2, caractérisé en ce que la rainure annulaire (23) logeant la bague (21) en matériau de protection anti-incendie est prévue dans la surface extérieure (24) de l'enveloppe de la bague d'étanchéité (15) en matériau élastique mou.

4. Raccord de serrage selon revendication 1, caractérisé en ce que la bague (21) en matériau de protection anti-incendie est disposée entre la bague d'étanchéité (15) et la bague de compression (14, 18) serrable.

5. Raccord de serrage selon revendication 4, caractérisé en ce que la surface intérieure (29) de l'enveloppe de la bague (21) en matériau de protection anti-incendie disposée entre la bague d'étanchéité (15) et la bague de compression (14, 18) serrable est disposée à une distance radiale de l'enveloppe extérieure (17) de la conduite sous pression (10) insérée.

*FIG.1*

EP 0 285 677 B1

FIG. 2

FIG. 3

**FIG. 4**